# EUROPÄISCHE PATENTSCHRIFT

(11) **EP 1 547 977 B1**
(45) Veröffentlichungstag und Bekanntmachung des Hinweises auf die Patenterteilung: **23.11.2011**
(21) Anmeldenummer: 03104877.0
(22) Anmeldetag: 22.12.2003
(51) Int. Cl.: C02F 1/02, C02F 9/00, C02F 1/44

(54) **Verfahren zur Aufbereitung von Abwasser**
Process for the treatment of waste water
Procédé pour le traitement d'eaux usées

(43) Veröffentlichungstag der Anmeldung: 29.06.2005
(73) Patentinhaber: Ford Global Technologies, LLC, A subsidary of Ford Motor Company, Dearborn, MI 48126 (US)
(72) Erfinder: Rick, Manfred, 53797, Lohmar (DE)
(74) Vertreter: Drömer, Hans-Carsten

(56) Entgegenhaltungen:
- EP-A- 1 293 485
- EP-A- 1 329 423
- WO-A-02/074698
- DE-A- 10 156 289
- US-A- 3 850 801

## Beschreibung

Die Erfindung betrifft ein Verfahren zur Aufbereitung von Abwasser, das einer biologischen Abbaustufe zugeführt wird, der eine Filteranlage nachgeschaltet ist. Die Erfindung betrifft aber auch eine Anlage zur Aufbereitung von Abwasser mit einer biologischen Abbaustufe sowie einer Filteranlage.

Die WO02/074698 befasst mit dem Entfernen von Sulfaten aus einen flüssigen Rohmaterial. Es wird offenbart, dass Wasser mittels unterschiedlicher Wärmetauschern auf Temperaturen weit über den Siedepunkt von Wasser zu erhitzen ist, wobei ein entsprechend hoher Druck eingestellt werden muss, um ein Sieden des Wassers zu verhindern Beschrieben wird auch, einen Hochdruckkessel zu verwenden, in welchem Kalziumsulfatanhydrit ausgefällt wird. Hierzu wird das Wasser einem Plattenwärmetauscher, einem Rohrwärmetauscher und einem weiteren Wärmetauscher in Form eines Dampfkondensators, und erst dann dem Hochdruckkessel bzw. dem Ausfällkessel zugeführt.

In der EP 1 293 485 A1 ist ein Verfahren zur Aufbereitung von Industrieabwässern offenbart, bei dem das Abwasser mindestens eine chemisch/physikalische Flockung/Fällung , ein Filtersystem, eine biologische Abwasserreinigungsstufe sowie eine Nanofiltrationseinheit durchläuft. Dieses Verfahren hat sich in der Praxis bewährt. Allerdings kann es bei diesem Verfahren je nach Betriebszustand der Anlage zu einer starken Verkeimung des Abwassers hinter der biologischen Abwasserreinigungsstufe kommen, was zu einer Verblockung einer Membrananlage führen kann.

In der DE 44 00 604 C1 wird ein Verfahren zum Betrieb einer Kleinstosmoseanlage offenbart, die in einem Umkehrosmosemodul aus zulaufendem Rohwasser ca. 10 - 50l/d Produktwasser in einem nahezu konstanten Produktwasserstrom herstellen kann. Der Produktwasserstrom wird auf ca. 70°C - 90°C erwärmt und anschließend wieder abgekühlt. Die Produktwassertemperatur wird solange auf einem keimtötenden Niveau gehalten, bis eine hinreichende Menge an Keimen im Produktwasser thermisch abgetötet wird.

Verfahren zur Abwasseraufbereitung in Kombination mit einer biologischen Abbaustufe sind bekannt. Diesen Verfahren ist das Grundprinzip gemeinsam, daß das Abwasser zunächst nach einer chemisch/physikalischen Vorbehandlung in eine biologische Abbaustufe eingeleitet wird. In der biologischen Abbaustufe werden im wesentlichen organische Kohlenwasserstoff-Verbindungen und Ammonium-Stickstoff-Verbindungen behandelt und biologisch abgebaut. Hinter der biologischen Abbaustufe wird das Abwasser in der Regel über geeignete Filtrationsverfahren einer Membrananlage zugeführt, in der dann mit Hilfe einer Ultra- oder Nanofiltration oder einer Umkehrosmose Restschadstoffe und Salze entfernt werden.

Das Abwasser wird in einem Kreislauf mit hoher Geschwindigkeit über eine Membranoberfläche gespült. Lediglich das durch die Membrane durchdringende Wasser (Permeat) wird in diesem Kreislauf ersetzt. Hieraus folgert eine Aufkonzentration der Schadstoffe in diesen Kreislauf (Konzentrat). Zum weiteren Abbau aufkonzentrierter Kohlenwasserstoff- und Ammonium-Stickstoff-Verbindungen wird das Konzentrat nach Verlassen der Membrananlage zu einem Teil oder vollständig wieder der biologischen Abbaustufe zugeführt.

Ein Hauptnachteil dieser Verfahren ist darin zu sehen, daß das Abwasser hinter der biologischen Abbaustufe mit Mikroorganismen belastet ist, deren Konzentration um so größer ist, je effektiver die biologische Abbaustufe arbeitet. Gerade diese mikrobiologische Belastung des Wassers führt aber zwangsläufig dazu, daß Bakterien und andere Mikroorganismen in die Membrananlage gespült werden und sich auf der Membranoberfläche und einem Spacer im Membranmodul ansiedeln und vermehren. Zudem werden die angesiedelten Bakterien im Membranmodul verfahrensbedingt ausreichend mit Sauerstoff und Substrat versorgt, so daß sich in kürzester Zeit eine eigene Biozönose bildet, die zu einer Verblockung des Membranmoduls führt.

Diese Verblockung findet in zwei Stufen statt: Zunächst bildet sich ein Biofilm auf der Membranoberfläche aus, der ein Durchdringen des Wassers durch die Membrane verhindert. Danach bildet sich, bedingt durch den Wachstumszyklus der Bakterien, ein Überschußschlamm aus abgestorbenen Mikroorganismen, der sich im Spacer festsetzt und den Durchfluß durch die Membrane behindert.

Bei Verfahren und Anlagen zur Aufbereitung von Abwasser als Kombination aus einer Membrananlage und einer biologischen Abbaustufe hat die mikrobiologische Aktivität des zu behandelnden Abwassers einen wesentlichen Einfluß auf die Leistungsfähigkeit, vor allem auf die Fluxrate der Membrananlage. Je größer die biologische Aktivität des Wassers, bedingt durch die biologische Abbaustufe ist, desto größer ist ein zu erwartendes Biofouling auf der Membranfläche, was zum Abfallen der Fluxrate durch die Membrane führt.

Der vorliegenden Erfindung liegt die Aufgabe zugrunde, ein verbessertes Verfahren und eine verbesserte Anlage zur Aufbereitung von Abwässern zur Verfügung zu stellen, bei der eine Verblockung der Membrane vermieden wird.

Erfindungsgemäß wird die Aufgabe zum einen durch ein Verfahren mit den Merkmalen des Anspruchs 1 und zu anderen mit einer Anlage mit den Merkmalen des Anspruchs 3 gelöst.

Der Erfindung liegt die Erkenntnis zugrunde, daß zur Vermeidung einer Verblockung der Membrane eine Desinfektion zum Beispiel mit Biozid, mittels Wasserstoffsuperoxid, mit Chlor oder mittels einer elektrolytischen Desinfektion nicht geeignet ist, da z. B. das Biozid nicht lokal wirkt, sondern von dem Kreislaufwasser hinter der Membrananlage auch in die biologische Abbaustufe eingetragen und diese nachhaltig zerstören würde.

Eine Desinfektion mit Wasserstoffsuperoxid als Desinfektionsmittel wirkt nur in Verbindung mit UV-Licht. Durch eine natürliche Trübung des Abwassers ist in der Regel aber davon auszugehen, daß die Eindringtiefe der UV-Strahlen für eine ausreichende Spaltung des Wasserstoffsuperoxids nicht gegeben ist. Darüber hinaus spricht noch ein weiterer Umstand gegen den Einsatz von Wasserstoffsuperoxid, der für alle oxidativ wirkenden Verfahren gilt. Die Wirkung von Wasserstoffsuperoxid beruht auf der Eigenschaft, daß aus einem Molekül durch die Bestrahlung mit UV-Licht ein Sauerstoffatom herausgebrochen wird, das als atomarer Sauerstoff einen Reaktionspartner sucht. Durch das sehr hohe Reaktionspotential reagiert der Sauerstoff mit den in der Zellstruktur eingelagerten DNS der Bakterien und verändert deren DNA, so daß die Bakterien entweder sofort absterben oder aber nicht mehr teilungsfähig sind.

Durch die hohe Reaktivität des atomaren Sauerstoffs reagiert das Atom aber nicht nur mit der DNS der Bakterien, sondern auch mit anderen Partnern mit einem Oxidationspotential. Dies sind vor allem die organischen Inhaltsstoffe im Abwasser. Diese Reaktion ist bekannter Weise nicht selektiv. Die Desinfektion der Bakterien erfolgt proportional der Oxidation aller anderen Schadstoffe. Lediglich ein Bruchteil des eingesetzten Wasserstoffsuperoxids kommt der Bakteriendesinfektion tatsächlich zugute. Daraus folgt, daß dieses Verfahren sehr kostenintensiv ist, da je nach organischer Belastung des Abwassers unwirtschaftliche Mengen von Wasserstoffsuperoxid eingesetzt werden müssen.

Eine Desinfektion mit Chlor führt zu denselben Nachteilen wie bei einer Desinfektion mit Biozid, was oben beschrieben wurde. Eine Depotwirkung des Chlors im Abwasser wird bei einem Kreislaufverfahren die biologische Abbaustufe nachhaltig zerstören.

Ähnlich wie bei einer Desinfektion mit Wasserstoffsuperoxid wird bei einer elektrolytischen Desinfektion durch einen elektrolytischen Prozeß atomarer Sauerstoff durch die Spaltung von Wasser hergestellt. Die Wirkung auf Bakterien und Inhaltsstoffe ist ähnlich wie die zu der Desinfektion mit Wasserstoffsuperoxid, was oben beschrieben wurde. Der Einsatz einer elektrolytischen Desinfektion ist nur bei sehr kleinen Volumenströmen geeignet, da die Investitionskosten sehr hoch sind.

Thermische Desinfektionsverfahren von Wasser und Abwasser beruhen auf dem Prinzip von Pasteur, wonach das Wasser auf eine erforderliche Temperatur erhitzt wird, um Bakterien, Keime und Viren nachhaltig abzutöten. Um den Energieaufwand für die Temperierung des Wassers zu minimieren, wird in der Regel eine Kaskade von Wärmetauschern eingesetzt, in denen die Energie des ablaufenden heißen Wassers an das ankommende kalte Wasser abgegeben wird. Hierbei treten Probleme auf, die in der vorteilhaften Anwendung des hier gezeigten Verfahrens berücksichtigt werden:
- Ausfallen von schwer löslichem Kalziumhydrogenkarbonat bei Temperaturen über 53 °C,
- Eliminieren von Kalziumsulfat um Gipsbildung zu minimieren,
- Minimieren des Primärenergieeinsatzes,
- Optimieren der Wärmetauscher-Oberflächen.

Der Erfindung liegt weiterhin die Erkenntnis zugrunde, daß eine ausreichende Entkeimung für einen kontinuierlichen Betrieb mit 60 °C erreichbar ist, wobei allerdings in größeren Zeitabständen kurzfristig auch mit höheren Temperaturen (bis 80°C) entkeimt werden muß, um auch thermostabilere Bakterienstämme erfassen zu können.

Um einer Membranverblockung vorzubeugen, ist es günstig im Sinne der Erfindung, wenn die thermische Desinfektion dem Biofilter direkt nachgeschaltet durchgeführt wird, um das Wasser thermisch zu entkeimen. Hierzu wird das Abwasser nach der biologischen Abbaustufe in die thermische Desinfektion geleitet. Aus der thermischen Desinfektion wird das Wasser über eine Filtereinheit in einen Vorlagebehälter der Membrananlage geleitet. Um möglichst viel Energie einzusparen ist es zweckmäßig, daß ein Volumenstrom aus der biologischen Abbaustufe minimiert wird, wobei der Volumenstrom ca. 120 % einer Permeatmenge hinter der Membrananlage betragen sollte. Im Membrankreislauf wird das Wasser ausgefiltert, wobei die Schadstoffe im Konzentrat bleiben und im Behälter angereichert werden. Das behandelte Wasser wird über einen Permeatablauf ausgeschleust. Das Konzentrat wird an einem Stellventil aufgeteilt. Ein Hauptstrom wird zurück in den Vorlagebehälter geleitet, wobei ein Teilstrom wieder zurück in die biologische Abbaustufe zur weiteren biologischen Behandlung geleitet wird.

Das aus dem Biofilter kommende Abwasser wird zunächst über eine Förderpumpe in einen Vorwärmetauscher geführt. Hier wird das Abwasser in einem ersten Schritt auf eine Temperatur unterhalb der Ausfalltemperatur von Kalziumhydrogenkarbonat erwärmt. Diese liegt unterhalb von 52°C. Hinter dem Wärmetauscher gelangt das Wasser in eine Fällungskammer und anschließend in eine Abscheidekammer. Zumindest die Fällungskammer ist als geschlossener, druckloser Behälter ausgestaltet. Möglich ist, daß sowohl Fällungskammer als auch die Abscheidekammer in einem gemeinsamen Behälter, vorzugsweise einem geschlossenen, drucklosen Behälter angeordnet sind. In einer Zuleitung zur Fällungskammer wird über eine Dosiereinheit Natriumhydrogenkarbonat dosiert eingeführt, um Kalziumsulfatreste in der Fällungskammer zu eliminieren. Damit wird eine Gipsbildung in der thermischen Desinfektion minimiert. Selbstverständlich können auch andere geeignete Chemikalien eingesetzt werden, die geeignet sind, CaSO₄x2H₂O chemisch derart zu verändern, daß dieses nicht als Gips ausfallen kann.

In der Fällungskammer ist eine Batterie aus Wärmetauscherplatten angeordnet. Die Größe der Wärmetauscherplatten ist so ausgelegt, daß das ankommende Wasser bei einem Regelbereich von 50 bis 60 °C in einem zweiten Schritt auf eine Temperatur von ca. 55 °C ± 1 °C erwärmt wird. Zur Verbesserung des Wärmeübergangs an der Oberfläche der Wärmetauscherplatten wird das Wasser über ein Tauchrührwerk in Bewegung gehalten. Zudem werden vorzugsweise die erste und die letzte Wärmetauscherplatte der Wärmetauscherplatten-Batterie an eine Gleichstromquelle angeschlossen und mit einer Gleichspannung von ca. 2 Volt beladen. Hierdurch wird erreicht, daß eine der Wärmetauscherplatte anodisch und eine dazu gegenüberliegende Wärmetauscherplatte kathodisch wirkt. Mittels dieses elektrolytischen Effektes wird erreicht, daß die positiv geladenen Ca-Ionen zur Kathode wandern. Um zu verhindern, daß sich auf der kathodischen Wärmetauscherplattenoberfläche Kalk ablagert, wird die Polung der Gleichstromquelle günstiger Weise in einstellbaren Zeiträumen getauscht. Dies hat den Vorteil, daß bereits auf der Oberfläche angelagerte Ca-lonen wieder abgestoßen werden.

Das Wasser wird durch einen Ablauf in einen geeigneten Sedimentabscheider oder ein anderes geeignetes Filtersystem, bevorzugt einen Schrägklärer geleitet, der in der Abscheidekammer angeordnet ist. In dem Schrägklärer werden sedimentierbare Stoffe, insbesondere schwer lösliche Kalkflocken abgeschieden. An einem Ablauf wird das Wasser aus der Abscheidekammer in einen Hochtemperatur-Wärmetauscher geleitet. Hierzu kann auch eine Pumpe eingesetzt werden. In dem Hochtemperatur-Wärmetauscher wird das Wasser durch eine Primärenergiequelle in einem dritten Schritt auf 60 bis 80 °C, vorzugsweise bis auf 75°C erwärmt, um eine Vollentkeimung zu erreichen. Der Hochtemperatur-Wärmetauscher ist bevorzugt derart ausgelegt, daß eine ausreichende Verweilzeit zur Vollentkeimung gewährleistet ist.

Das entkeimte Wasser wird nach dem Hochtemperatur-Wärmetauscher primärseitig in die Wärmetauscher-Batterie geleitet, um die Fällungskammer aufzuwärmen. Die Wärmetauscherplatten sind hierzu hohl ausgebildet und mittels Verteilleitungen verbunden. Nach Verlassen der Wärmetauscher-Batterie wird das Wasser in den Vorwärmetauscher eingeleitet, um das ankommende Abwasser in dem Vorwärmetauscher zu erwärmen. Dies ist günstig, da damit die Wärmeenergie aus dem Hochtemperatur-Wärmetauscher genutzt wird. Um möglichst geringe Wärmeenergie Verluste zu haben, ist es zweckmäßig, wenn der Vorwärmetauscher, die Fällungskammer, die Abscheidekammer und/oder der Hochtemperatur-Wärmetauscher mit einem Wärmedämmstoff oder dergleichen thermisch isoliert ist. Damit wird der Primäreintrag weiter minimiert. Nach Verlassen des Vorwärmetauschers wird das Wasser der weiteren Behandlung in der Filteranlage zugeführt.

Günstig im Sinne der Erfindung ist, wenn die Steuerung der Primärenergiequelle über ein Thermostat erfolgt, welches den Sollwert für die Fällungskammer mißt. Durch die Steuerung der Primärenergiezufuhr mittels des Thermostats wird über die Entkeimungstemperatur im Hochtemperatur-Wärmetauscher die erforderliche Vorlauftemperatur in der Wärmetauscher-Batterie eingestellt.

Um den elektrolytischen Effekt in der Wärmetauscher-Batterie zu erreichen, wird diese zweckmäßigerweise derart gestaltet, daß die einzelnen Wärmetauscherplatten elektrisch voneinander getrennt sind. Dies wird bevorzugt dadurch erreicht, daß die Verteilleitungen zu den einzelnen Platten aus nicht-leitendem Kunststoff bestehen.

In einer alternativen Ausgestaltung wird jede Wärmetauscherplatte an den Pluspol der Gleichstromquelle angeschlossen, wobei zwischen jeder Wärmetauscherplatte eine Blechtafel, vorzugsweise eine Edelstahl-Blechtafel angeordnet ist, die an den Minuspol der Gleichstromquelle angeschlossen ist. Hiermit wird vorteilhafter Weise erreicht, daß die Wärmetauscher-Platten anodisch wirken und die dazwischen angeordneten Blechtafeln kathodisch wirken. Die positiv geladenen Ca-lonen werden nun bestrebt sein, sich an der Kathode anzulagern. Damit wird besonders vorteilhaft verhindert, daß sich Kalkablagerungen an den Wärmetauscherplatten bilden.

Der abgeschiedene Kalkschlamm aus dem Schrägklärer wird in regelmäßigen Abständen an einem Bodenventil eines Trichters, welcher der Abscheidekammer zugeordnet ist abgezogen.

Mit dem Erfindungsgemäßen Verfahren und der erfindungsgemäßen Anlage zur Aufbereitung von Abwässern wird biologisch aktives Abwasser aus dem Ablauf der biologischen Abbaustufe desinfiziert, bevor es in den Membrankreislauf geleitet wird. Damit wird ein biologisches Wachstum zumindest vermindert oder sogar vollständig unterbunden.

Weiter kann der Energieeintrag bei einer Entkeimungstemperatur von 60 °C auf einen Energieverbrauch von ca. 8,9 kWh/m³ Wasser begrenzt werden. Höchst vorteilhaft ist, daß keine zusätzliche Primärenergie dadurch verbraucht wird, daß neben der Entkeimung auch andere organische Verbindungen im Wasser abgebaut werden.

Ein zusätzlich vorteilhafter Aspekt der Erfindung ist in der Teilentkalkung des Wassers zu sehen, wodurch die Bedingungen für die Membranen verbessert werden. Mittels der Abscheidung des Kalziumhydrogenkarbonats vor der Membrane kann ein durchschnittliche Flux um mehr als 15 % gesteigert werden.

Weitere vorteilhafte Ausgestaltungen der Erfindung sind in den Unteransprüchen und in der folgenden Figurenbeschreibung offenbart.

Es zeigen:
- Figur 1: eine schematische Darstellung einer Abwasserbehandlungsanlage,
- Figur 2: eine thermischen Desinfektionsanlage im Querschnitt.

In den einzelnen Figuren sind gleiche Teile stets mit denselben Bezugszeichen versehen, so daß sie in der Regel auch nur einmal beschrieben werden.

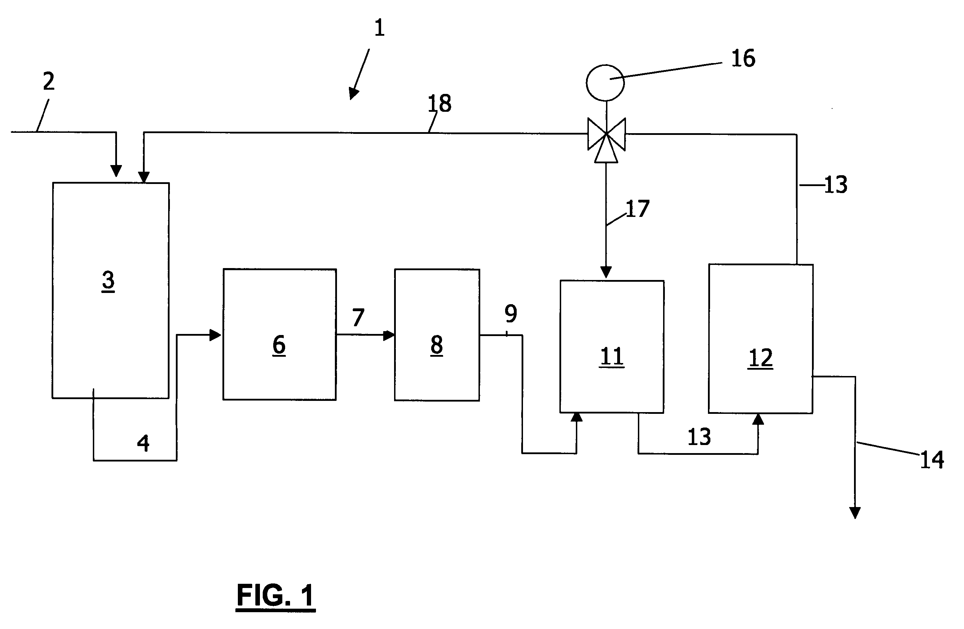

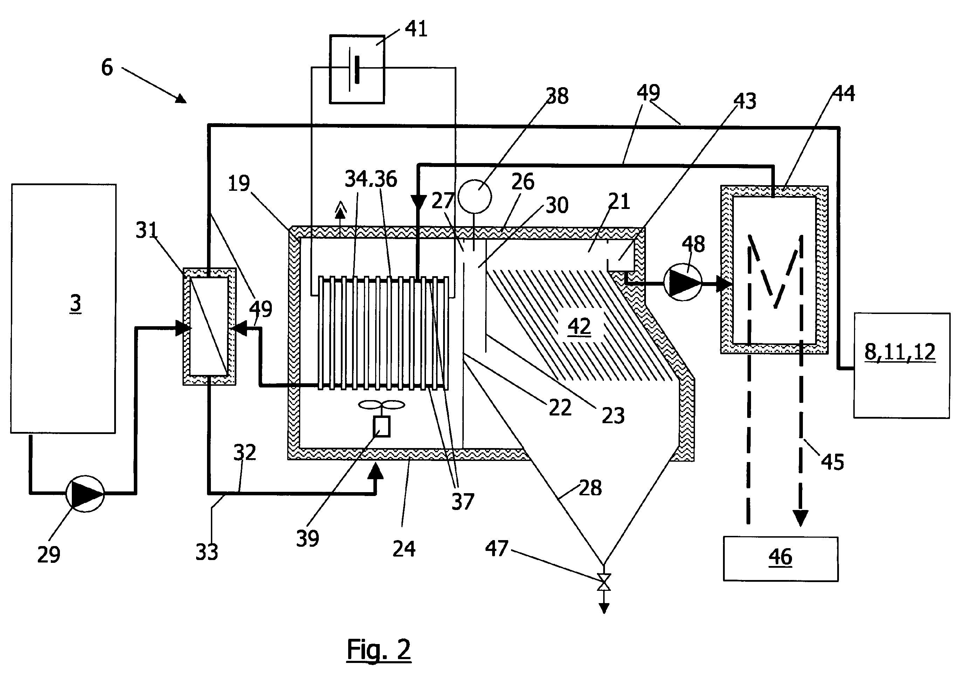

Figur 1 eine Anlage 1 zur Aufbereitung von Abwässern. Die Anlage 1 kann bevorzugt zur Behandlung von Abwässern der metallverarbeitenden Industrie verwendet werden. Über eine Zuleitung 2 wird das Abwasser einer biologischen Abbaustufe 3 zugeführt wird. Die biologische Abbaustufe 3 ist eine herkömmliche, bekannte biologische Abbaustufe. Das Abwasser wird aus der biologischen Abbaustufe 3 über eine Zuleitung 4 einer thermischen Desinfektion 6 zugeführt. Die thermische Desinfektion 6 wird nachfolgend näher zu Figur 2 beschrieben.

Aus der thermischen Desinfektion 6 wird das Abwasser über eine Leitung 7 und einer Filtereinheit 8 mittels einer Zuleitung 9 in einen Vorlagebehälter 11 einer Membrananlage 12 geführt. Der Vorlagebehälter 11 und die Membrananlage 12 sind in einem Kreislauf 13 zusammengeschlossen. Die Filtereinheit 8, der Vorlagebehälter 11 und die Membrananlage 12 bilden beispielhaft eine Filteranlage. Innerhalb des Membrankreislaufs 11, 12, 13 wird das Wasser ausgefiltert. Schadstoffe bleiben in einem Konzentrat und werden in dem Vorlagebehälter 11 angereichert. Das behandelte Wasser wird über einen Permeatablauf 14 ausgeschleust. Das Konzentrat wird an einem Stellventil 16 aufgeteilt. Ein Hauptstrom 17 wird zurück in den Vorlagebehälter 11 geleitet, wobei ein Teilstrom innerhalb einer Zuleitung 18 zurück in die biologische Abbaustufe 3 zur weiteren biologischen Behandlung geleitet wird.

Die Ausgestaltung der thermischen Desinfektion 6 ist in Figur 2 dargestellt. Die thermische Desinfektion 6 weist eine Fällungskammer 19 und eine Abscheidekammer 21 auf. Zwischen der Fällungskammer 19 und der Abscheidekammer 21 ist zum einen eine Scheidewand 22 und zum anderen ein Wehr 23 angeordnet. Die Scheidewand 22 erstreckt sich von einer Breitseitenwandung des Behälters, die beispielhaft als Fußwandung 24 bezeichnet wird, zu einer der Fußwandung 24 gegenüberliegenden Breitseitenwandung des Behälters, die beispielhaft als Kopfwandung 26 bezeichnet wird. In der Scheidewand 22 ist eine Überströmöffnung 27 in der Nähe der Kopfwandung 26 angeordnet. Das Wehr 23 erstreckt sich von der Kopfwandung 26 in Richtung zur Fußwandung 24 und endet kurz vor einem Trichter 28, der weiter unten erläutert wird. Somit ist die Fällungskammer 19 von der Abscheidekammer 21 getrennt. Zwischen der Scheidewand 22 und dem Wehr 23 ist ein Ablauf 30 gebildet.

Das aus der biologischen Abbaustufe 3 kommende Abwasser wird zunächst über eine Förderpumpe 29 in einen Vorwärmetauscher 31 geführt. Von dem Vorwärmetauscher 31 gelangt das Wasser in die Fällungskammer 19. An einer Zuleitung 32 zur Fällungskammer 19 ist eine Dosiereinheit 33 zur Dosierung von Natriumhydrogenkarbonat angeordnet. Die Dosiereinheit 33 kann aber auch derart angeordnet sein, daß sie mit einer Zuleitung direkt in der Fällungskammer 19 mündet.

In der Fällungskammer 19 sind Wärmetauscherplatten 34 angeordnet. Vorzugsweise sind mehrere Wärmetauscherplatten 34 zu einer Wärmetauscher-Batterie 36 zusammengefaßt. Die einzelnen Wärmtauscherplatten 34 sind elektrisch voneinander getrennt. Dies wird erreicht, indem z.B. Verteilleitungen 37 zu den einzelnen Wärmtauscherplatten 34 aus nicht-leitendem Kunststoff bestehen. Die Steuerung der thermischen Desinfektion erfolgt über ein Thermostat 38. Das Thermostat 38 ist derart angeordnet, daß die Temperatur in dem Ablauf 30 kontrolliert werden kann, um eine Primärenergiequelle 46 zu steuern, auf die weiter unten eingegangen wird.

Zur Verbesserung des Wärmeübergangs an den Oberflächen der Wärmetauscherplatten 34 wird das Wasser über ein Tauchrührwerk 39 in Bewegung gehalten. Das Tauchrührwerk 39 wirkt mit nicht dargestellten Leitblechen derart zusammen, daß eine gleichmäßige Überströmung der Wärmetauscherplatten 34 gewährleistet ist. Zudem werden zwei der Wärmtauscherplatten 34, vorzugsweise die jeweils äußeren Wärmetauscherplatten 34 an eine Gleichstromquelle 41 angeschlossen. Die Wärmetauscherbatterie 36 kann derart ausgestaltet sein, daß alle Wärmetauscherplatten 34 an den Pluspol der Gleichstromquelle 41 angeschlossen werden, wobei zwischen den jeweiligen Wärmetauscherplatten 34 geeignete Bleche angeordnet sind, die an den Minuspol der Gleichstromquelle 41 angeschlossen sind. Die Wärmetauscherplatten 34 und die Bleche sind hierbei elektrisch voneinander getrennt.

Das Wasser wird durch den Ablauf 30 in die Abscheidekammer 21, in der ein Schrägklärer 42 angeordnet ist geleitet.

In der Abscheidekammer 21 ist ein Ablauf 43 angeordnet, durch den das Wasser in einen Hochtemperatur-Wärmetauscher 44 geleitet wird. Hierzu ist eine Pumpe 48 vorgesehen. In dem Hochtemperatur-Wärmetauscher 44 ist ein Heizelement 45 angeordnet, daß mit einer Primärenergiequelle 46 verbunden ist.

Die thermische Desinfektion 6 weist aufeinanderfolgend den Vorwärmetauscher 31, die Fällungskammer 19, die Abscheidekammer 21 und den Hochtemperatur-Wärmetauscher 44 auf.

Das entkeimte Wasser wird nach dem Hochtemperatur-Wärmetauscher 44 primärseitig in die Wärmetauscher-Batterie 36 geleitet, um die Fällungskammer 19 aufzuwärmen. Die Wärmetauscherplatten 34 sind hierzu hohl ausgebildet und mittels der Verteilleitungen 37 verbunden. Nach Verlassen der Wärmetauscher-Batterie 36 wird das Wasser in den Vorwärmetauscher 31 eingeleitet, um das ankommende Abwasser in diesem zu erwärmen. Um möglichst geringe Wärmeenergie Verluste zu haben, ist es zweckmäßig, wenn der Vorwärmetauscher 31, die Fällungskammer 19, die Abscheidekammer 21 und/oder der Hochtemperatur-Wärmetauscher 44 mit einem Wärmedämmstoff oder dergleichen thermisch isoliert ist. Damit wird der Primärenergieeintrag weiter minimiert. Nach Verlassen des Vorwärmetauschers 31 wird das Wasser der weiteren Behandlung in der Filteranlage zugeführt. Der Weg des entkeimten Wassers von dem Hochtemperatur-Wärmetauscher 44, über die Wärmetauscherplatten 34 und den Vorwärmetauscher 31 zur Filteranlage ist in Figur 2 beispielhaft mittels der Leitung 49 dargestellt.

Der abgeschiedene Kalkschlamm aus dem Schrägklärer 42 wird in regelmäßigen Abständen an einem Bodenventil 47, das an dem Trichter 28 angeordnet ist abgezogen.

Mit der erfindungsgemäßen Anlage und dem erfindungsgemäßen Verfahren zur Aufbereitung von Industrieabwässern wird erreicht, daß eine Verblockung der Membrane verhindert wird, indem das Abwasser thermisch desinfiziert wird um Biofouling, das durch Keimbildung in der biologischen Abbaustufe verursacht wird, in der nachgeschalteten Membrananlage zu vermindern.

## Patentansprüche

1. Verfahren zur Aufbereitung von Abwasser, das einer biologischen Abbaustufe (3) zugeführt wird, der eine Filteranlage nachgeschaltet ist,
**gekennzeichnet durch**
eine thermische Desinfektion (6), welche der biologischen Abbaustufe (3) nachgeschaltet und der Filteranlage vorgeschaltet ist, wobei in der thermischen Desinfektion (6) das Abwasser entkeimt wird, wobei das Abwasser
in einem ersten Schritt in einem Vorwärmetauscher (31) auf eine Temperatur unterhalb der Ausfalltemperatur von Kalziumhydrogenkarbonat erwärmt wird,
in einem zweiten Schritt in einer Fällungskammer (19) bei einem Regelbereich von 50°C bis 60°C auf eine Temperatur von 55°C ± 1°C erwärmt wird, und
in einem dritten Schritt in einem Wärmetauscher (44) auf eine Temperatur von 60°C bis 80°C erwärmt wird

2. Verfahren nach Anspruch 1,
**dadurch gekennzeichnet, daß**
nach dem dritten Schritt entkeimtes Wasser von dem Wärmetauscher (44) primärseitig in Wärmetauscherplatten (34) geleitet wird, die in der Fällungskammer (19) angeordnet sind, um die Fällungskammer (19) aufzuwärmen und anschließend in den Vorwärmetauscher (31) geleitet wird, um das ankommende Abwasser in diesem zu erwärmen, wobei das entkeimte Wasser nach Verlassen des Vorwärmetauschers (31) zur weiteren Behandlung der Filteranlage zugeführt wird.

3. Anlage zur Aufbereitung von Abwasser mit einer biologischen Abbaustufe (3) und einer Filteranlage insbesondere zur Durchführung des Verfahrens nach den vorhergehenden Ansprüchen,
**gekennzeichnet durch**
eine thermische Desinfektion (6), welche der biologischen Abbaustufe (3) nachgeschaltet und der Filteranlage vorgeschaltet ist, wobei die thermische Desinfektion (6) aufeinander folgend einen Vorwärmetauscher (31), eine Fällungskammer (19), eine Abscheidekammer (21) und einen Wärmetauscher (44) aufweist, wobei das Abwasser in mehreren Schritten und zwar in einem ersten Schritt in dem Vorwärmetauscher (31) auf eine Temperatur unterhalb der Ausfalltemperatur von Kalziumhydrogenkarbonat, in einem zweiten Schritt in der Fällungskammer (19) bei einem Regelbereich von 50°C bis 60°C auf eine Temperatur von 55°C ± 1 °C und in einem dritten Schritt in dem Wärmetauscher (44) auf eine Temperatur von 60°C bis 80°C erwärmt wird, so dass das Abwasser in der thermischen Desinfektion (6) entkeimbar ist.

4. Anlage nach Anspruch 3,
**dadurch gekennzeichnet, daß**
die thermische Desinfektion (6) in ihrer Fällungskammer (19) mehrere Wärmetauscherplatten (34) aufweist, die vorzugsweise zu einer Wärmetauscherplatten-Batterie (36) zusammengefaßt sind.

5. Anlage nach Anspruch 3 oder 4,
**dadurch gekennzeichnet, daß**
der thermischen Desinfektion (6) eine an in ihrer Fällungskammer (19) angeordneten Wärmetauscherplatten (34) angeschlossene Gleichstromquelle (41) zugeordnet ist.

## Claims

1. Process for treating wastewater that is fed to a biodegradation stage (3) which is connected downstream of a filter system, **characterized by** a thermal disinfection (6) which is connected downstream of the biodegradation stage (3) and upstream of the filter system, wherein, in the thermal disinfection (6) the wastewater is disinfected, wherein the wastewater
is warmed in a first step in a preliminary heat exchanger (31) to a temperature below the precipitation temperature of calcium hydrogencarbonate,
in a second step, is warmed in a precipitation chamber (19) to a temperature of 55°C ± 1°C in a control range of 50°C to 60°C, and
in a third step, is warmed to a temperature of 60°C to 80°C in a heat exchanger (44).

2. Process according to Claim 1, **characterized in that**
disinfected water downstream of the third step is passed from the heat exchanger (44) on the primary side in heat exchange plates (34) which are arranged in the precipitation chamber (19) in order to warm up the precipitation chamber (19), and is then passed into the preliminary heat exchanger (31) in order to warm the influent wastewater therein, wherein the disinfected water, after it leaves the preliminary heat exchanger (31), is fed to the filter system for further treatment.

3. System for treating wastewater having a biodegradation stage (3) and a filter system, in particular for carrying out the process according to the preceding claims, **characterized by** a thermal disinfection (6) which is connected downstream of the biodegradation stage (3) and upstream of the filter system, wherein the thermal disinfection (6) comprises successively a preliminary heat exchanger (31), a precipitation chamber (19), a separation chamber (21) and a heat exchanger (44), wherein the wastewater is warmed in a plurality of steps, more precisely in a first step in the preliminary heat exchanger (31), to a temperature below the precipitation temperature of calcium hydrogencarbonate, in a second step in the precipitation chamber (19) to a temperature of 55°C + 1°C in a control range of 50°C to 60°C, and in a third step, in the heat exchanger (44), to a temperature of 60°C to 80°C, such that the wastewater can be disinfected in the thermal disinfection (6).

4. System according to Claim 3, **characterized in that** the thermal disinfection (6) has in the precipitation chamber (19) thereof a plurality of heat-exchange plates (34) which are preferably combined to form a heat-exchange plate battery (36).

5. System according to Claim 3 or 4, **characterized in that**
a direct current source (41) connected to heat-exchange plates (34) arranged in the precipitation chamber (19) of the thermal disinfection (6) is assigned to the thermal disinfection (6).

## Revendications

1. Procédé de conditionnement d'une eau résiduaire, qui est introduite dans une étape de décomposition biologique (3), à laquelle une unité de filtration est connectée en aval, **caractérisé par**
une désinfection thermique (6), qui est en aval de l'étape de décomposition biologique (3) et en amont de l'unité de filtration, l'eau résiduaire étant stérilisée dans la désinfection thermique (6), l'eau résiduaire étant,
lors d'une première étape dans un pré-échangeur de chaleur (31), portée à une température inférieure à la température de précipitation de l'hydrogénocarbonate de calcium,
lors d'une deuxième étape dans une chambre de précipitation (19) dans une plage de réglage de 50 °C à 60 °C, portée à une température de 55 °C ± 1 °C, et lors d'une troisième étape dans un échangeur de chaleur (44), portée à une température de 60 °C à 80 °C.

2. Procédé selon la revendication 1, **caractérisé en ce qu'**après la troisième étape, l'eau stérilisée issue de l'échangeur de chaleur (44) est principalement introduite dans des plaques d'échange de chaleur (34) qui sont placées dans la chambre de précipitation (19) afin de chauffer la chambre de précipitation (19), puis introduite dans le pré-échangeur de chaleur (31) afin de chauffer l'eau résiduaire arrivant dans celui-ci, l'eau stérilisée après la sortie du pré-échangeur de chaleur (31) étant introduite dans l'unité de filtration pour le traitement supplémentaire.

3. Unité de conditionnement d'une eau résiduaire comprenant une étape de décomposition biologique (3) et une unité de filtration, notamment pour la réalisation du procédé selon les revendications précédentes, **caractérisée par**
une désinfection thermique (6), qui est en aval de l'étape de décomposition biologique (3) et en amont de l'unité de filtration, la désinfection thermique (6) comprenant successivement un pré-échangeur de chaleur (31), une chambre de précipitation (19), une chambre de séparation (21) et un échangeur de chaleur (44), l'eau résiduaire étant chauffée en plusieurs étapes, et ce lors d'une première étape dans le pré-échangeur de chaleur (31) à une température inférieure à la température de précipitation de l'hydrogénocarbonate de calcium, lors d'une deuxième étape dans la chambre de précipitation (19) dans une plage de réglage de 50 °C à 60 °C à une température de 55 °C ± 1 °C, et lors d'une troisième étape dans l'échangeur de chaleur (44) à une température de 60 °C à 80 °C, de manière à ce que l'eau résiduaire puisse être stérilisée dans la désinfection thermique (6).

4. Unité selon la revendication 3, **caractérisée en ce que** la désinfection thermique (6) comprend dans sa chambre de précipitation (19) plusieurs plaques d'échange de chaleur (34), qui sont de préférence regroupées en une batterie de plaques d'échange de chaleur (36).

5. Unité selon la revendication 3 ou 4, **caractérisée en ce qu'**une source de courant continu (41) raccordée aux plaques d'échange de chaleur (34) placées dans sa chambre de précipitation (19) est attribuée à la désinfection thermique (6).
